# EUROPEAN PATENT APPLICATION

(11) **EP 2 657 014 A1**
(43) Date of publication of application: **30.10.2013**
(21) Application number: 12179440.8
(22) Date of filing: 06.08.2012
(51) Int. Cl.: B32B 27/08, B29C 51/10, B29C 51/14, B29C 63/04

(54) **Multilayer decorative film structure**

(30) Priority: 27.04.2012 TW 101115246
(71) Applicant: Chaei Hsin Enterprise Co., Ltd., Taichung City 407 (TW)
(72) Inventor: Shui-Mu, Wang, 407 Taichung City (TW)
(74) Representative: Lang, Christian

(57) **Abstract**

A multilayer decorative film structure is attached to and shaped on multiple processing surfaces of a preformed three-dimensional structural part, where the processing surfaces form a three-dimensional shape. An adhesive layer thereof is adhered to the processing surfaces. The bilayer structure, located at a side of the adhesive layer, includes a thermoplastic film and a decorative film. The thermoplastic film has an inner surface and an outer surface. The decorative film is laminated at a side of the thermoplastic film and has a decorative structure. Within a thermal shaping temperature range of the multilayer decorative film structure, the bilayer structure and the adhesive layer is attachable and shapeable onto the processing surfaces of the preformed three-dimensional structural part. When lower than the thermal shaping temperature range, the bilayer structure and the adhesive layer is solidified into a shape as the same as the three-dimensional shape of the processing surfaces.

## Description

### BACKGROUND OF THE INVENTION

### Technical Field

The present invention relates to a film structure, and more particularly to a multilayer decorative film structure for decorating multiple processing surfaces of a preformed three-dimensional structural part in a secondary/post processing manner.

### Related Art

At present, for external three-dimensional structural parts of a product, such as a case, a panel, and a decorative part of an electronic device, their surfaces have a more diversified structural modeling design. The three-dimensional structure of an external three-dimensional structural part may include a local convex or concave form or a bending side edge, which is suitable for integrated printing or attachment processing.

For such an external three-dimensional structural part, in the common conventional surface decoration processing technology, methods such as paint spraying, electroplating, or sputtering are applied on a surface of the external three-dimensional structural part to form a decorative layer, so that the surface of the external structural part has specific colors, or provides a surface tactile sense of a smooth or matte surface. However, the decorative layer formed by using the foregoing mode usually only shows different colors or textures on the plane, and is not easy to form different kinds of geometric lines or patterns. Furthermore, chemical agents used in paint spraying and electroplating processes, or noxious chemical agents used in the processes such as benzene and alcohol related medicaments, volatilize into the air to result in air pollution. Even worse, the discharge of sewage containing emitted heavy metal pollutants such as nickel, chromium, cadmium, and copper leads to serious environmental pollution.

The high-cost in-mold decoration (IMD) technology is a brand-new technology, in which a plastic film is placed into a plastic injection mold of a plastic injection shaping machine to perform the surface treatment on the appearance of plastics.

In-mold label (IML) is a first kind of IMD technologies. In the engineering method, a pattern in the surface treatment is printed on a film in advance, the film is placed in a mold cavity, and injection shaping is performed. At the same time of performing the injection shaping, ink is transferred onto a plastic part by using the plastic heat. After the mold is opened and the plastic part is ejected, the two steps, that are, shaping and pattern transfer printing, are completed. A disadvantage of the IML is that it cannot be used in the surface treatment in a case of complicated shape, and is only applicable to a plastic injection shaping container of a box or cup shape.

In-mold roller (IMR) is a second kind of IMD technologies. In the engineering method, a pattern is printed on a film, and the film is wrapped around a film reel, and a film feeding device attaches a diaphragm to a shaping cavity to perform the injection shaping. After the injection shaping, an ink layer with a pattern is separated from the film and left on the plastic part to obtain a plastic part with a decorative pattern on the surface. There is no transparent protective film on the surface of the final product, and the diaphragm is just a carrier in the production. IMR is one of the mainstream surface treatment technologies of plastic cases of notebook computers. However, a disadvantage of IMR is that a printed pattern layer is likely to wear off and fade; in addition, the change of a processable curved surface cannot be too great. Therefore, IMR is not applicable to the cases with special modeling.

In-mold film (IMF) is a third kind of IMD technologies. In the engineering method, a film itself first undergoes steps such as softening and vacuum shaping; after the 3D shaping is completed, surface treatment is performed. The IMF engineering method is not applicable to mass production, and its cost is about 20% higher than that of IMR. Consequently, IMF is less popular than IMR.

An advantage of IMD technologies is that the IMD technologies integrate the plastic injection process and the surface treatment process, so that shaping and decoration of an ejected structural part are completed in one pass. However, for a preformed, especially a non-plastic external three-dimensional structural part, IMD technologies cannot be used to perform the secondary processing.

### SUMMARY

Accordingly, the present invention provides a multilayer decorative film structure used to be attached to and shaped on multiple processing surfaces of a preformed three-dimensional structural part, where the processing surfaces form a three-dimensional shape. The multilayer decorative film structure includes an adhesive layer and a bilayer structure. The adhesive layer is used to adhere to the processing surfaces of the preformed three-dimensional structural part; the bilayer structure is located at a side of the adhesive layer and includes a thermoplastic film and a decorative film. The thermoplastic film is 0.05 mm to 1 mm thick and has an inner surface and an outer surface; the decorative film is laminated at a side of the thermoplastic film, is 1 µm to 1 mm thick, and has a decorative structure. A thermal shaping temperature range of the multilayer decorative film structure is defined from 80 to 250 degrees centigrade. Within the thermal shaping temperature range, the bilayer structure and the adhesive layer may be attached to and shaped on processing surfaces of the preformed three-dimensional structural part. When the temperature is lower than the thermal shaping temperature range, the bilayer structure and the adhesive layer may be solidified into a shape the same as a three-dimensional shape of the processing surfaces.

The multilayer decorative film structure according to the present invention is used to be attached to and shaped on processing surfaces of a preformed three-dimensional structural part and decorate the preformed three-dimensional structural part, so that the structural part is visually appealing; and the multilayer decorative film structure features a color structure, a pattern structure, a line structure, and a reflective structure as well as any combination thereof, thereby meeting the requirements for diversification of surface designs of products at present to achieve different visual effects and textures. By replacing the prior art effectively, the present invention avoids serious environmental pollutions caused by paint spraying and electroplating decoration industries, such as air, water source, and soil pollutions, which conforms to the environmental protection concept which is attracting more and more attention. The decorative processing surfaces according to the present invention are applicable to various products such as 3C products, household appliances, articles for daily use, decorative building materials, bicycles, and parts of automobiles and locomotives.

The detailed features and advantages of the present invention are described below in detail through the following embodiments, and the content of the detailed description is sufficient for persons skilled in the art to understand the technical content of the present invention and to implement the present invention accordingly. Based upon the content of the specification, the claims, and the drawings, persons skilled in the art can easily understand the relevant objectives and advantages of the present invention.

### BRIEF DESCRIPTION OF THE DRAWINGS

The present invention will become more fully understood from the detailed description given herein below for illustration only, and thus not limitative of the present invention, wherein:
FIG. 1 is a schematic view (1) of an attachment and shaping process of a multilayer decorative film structure according to the present invention;
FIG. 2 is a schematic view (2) of the attachment and shaping process of the multilayer decorative film structure according to the present invention;
FIG. 3 is a schematic view (3) of the attachment and shaping process of the multilayer decorative film structure according to the present invention;
FIG. 4 is a schematic view (4) of the attachment and shaping process of the multilayer decorative film structure according to the present invention;
FIG. 4A is a schematic sectional view of a multilayer decorative film structure according to a first embodiment of the present invention, and corresponds to the location of the region A of FIG. 3;
FIG. 4B is a schematic sectional view of a multilayer decorative film structure according to a second embodiment of the present invention, and corresponds to the location of the region A of FIG. 3;
FIG. 4C is a schematic sectional view of a multilayer decorative film structure according to a third embodiment of the present invention, and corresponds to the location of the region A of FIG. 3;
FIG. 4D is a schematic sectional view of a multilayer decorative film structure according to a fourth embodiment of the present invention, and corresponds to the location of the region A of FIG. 3; and
FIG. 4E is a schematic sectional view of the multilayer decorative film structure in FIG. 4 according to the present invention.

### DETAILED DESCRIPTION

The multilayer decorative film structure of the present invention is applicable to the secondary processing of a preformed three-dimensional structural part. The preformed three-dimensional structural part refers to an external three-dimensional structural part which is shaped and manufactured in advance. The material thereof may be a plastic or non-plastic material, and for example, may be selected from the group consisting of polycarbonate (PC), acrylonitrile butadiene styrene (ABS), PC/ABS resin composite material, nylon, alloy, memory alloy, metal, hard rubber, soft rubber, foaming material, hard plastic, soft plastic and any combination thereof. In an actual example, the preformed three-dimensional structural part may be a housing or protective case of a mobile electronic device such as a mobile phone, a notebook PC, or a tablet PC and their peripheral products, or a housing or decorative panel of other household appliances such as an air conditioner, a TV, an audio apparatus, a refrigerator, an air cleaner, and a dehumidifier, but the present invention is not limited to this. The preformed three-dimensional structural part has multiple consecutive processing surfaces and the consecutive processing surfaces are located on different planes, so a special three-dimensional shape is formed. For different preformed three-dimensional structural parts, each processing surface may be a plane, a cambered surface, or an irregular curved surface which has different locations and sizes and may have holes or cavities with different shapes. For a protective case attached to a back and sides of a smart mobile phone, main processing surfaces of the protective case may usually be one back face and four side faces, but due to differences in the whole design and shaping, the three-dimensional shapes formed by different processing surfaces on the housing are not exactly the same. Since it is not limited by the environment of the injection shaping process, the multilayer decorative film structure using the secondary processing apparently has a wide material choice in a decorative effect. However, to adapt to different three-dimensional shapes formed on different processing surfaces, the multilayer decorative film structure should have a thermoplastic processing effect. Furthermore, the multilayer decorative film structure also needs to have a feature that the structure can still maintain a fixed shape at a normal temperature or a temperature which is two to three times of the normal temperature, so that a finished product is unlikely to deform when affected by the environmental temperature. Therefore, the application of a thermal curing material should be excluded from the multilayer decorative film structure according to the present invention.

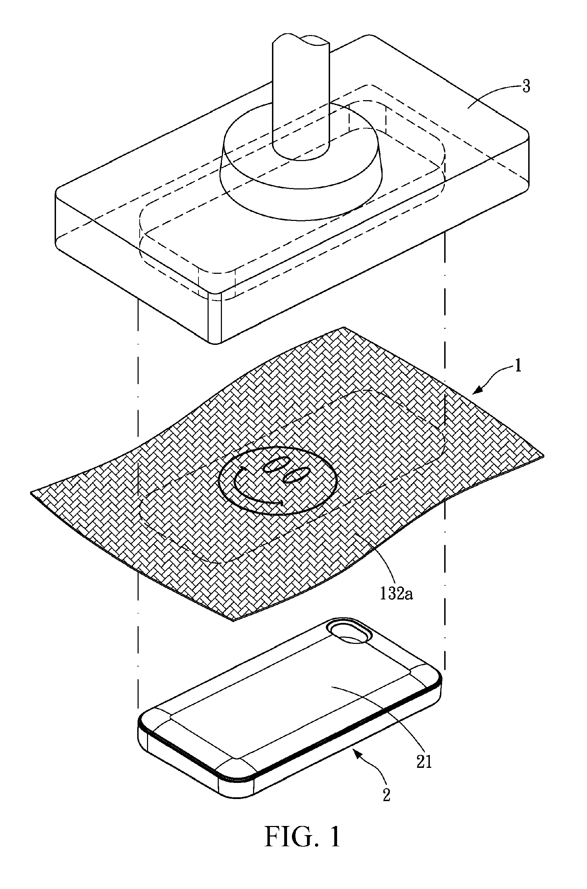

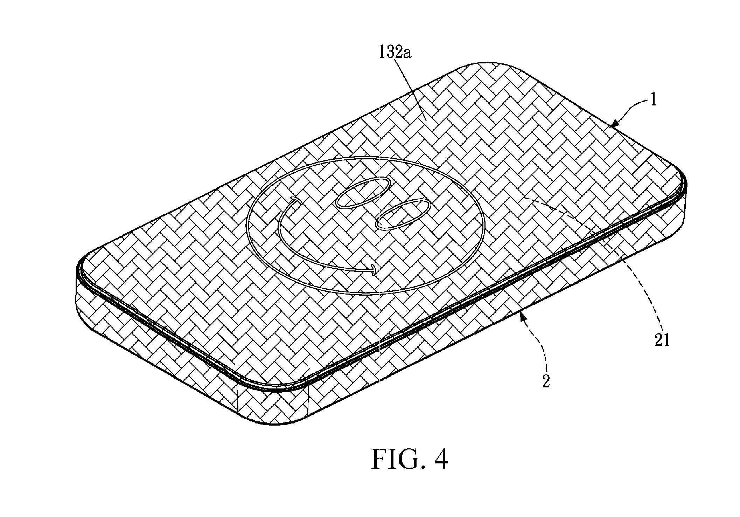

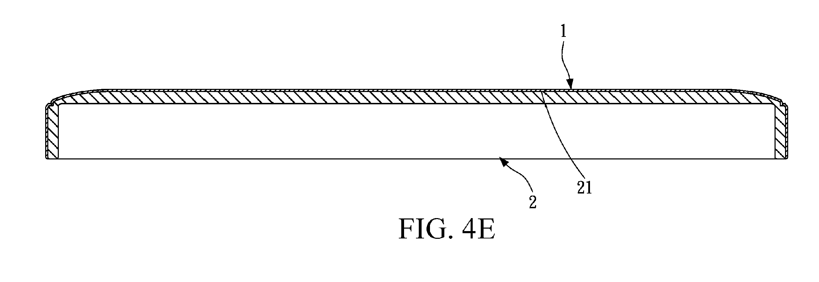

Please refer to FIGs. 1 to 4, which are schematic views (1) to (4) of an attachment and shaping process of a multilayer decorative film structure according to the present invention. In an embodiment, at a side of the multilayer decorative film structure 1, a decorative structure 132a, such as a color, a pattern (for example, a smiling face in the drawing), a two-dimensional or three-dimensional line structure (for example, weaving lines in the drawing), a reflective face, a glossy face, or a matte face may be displayed, so as to provide decorative effects. In addition, to consider both the thermoplastic processing effect and the characteristic of maintaining the fixed shape at a normal temperature, the multilayer decorative film structure 1 has a Shore Type D hardness 20-80D, and a thermal shaping temperature range is defined from 80 to 250 degrees centigrade. In the processing environment providing such thermal shaping temperature range, the multilayer decorative film structure 1 may be attached to and shaped on multiple processing surfaces 21 of a preformed three-dimensional structural part 2, so as to form a special three-dimensional shape. For example, in FIGs. 1 to 4, the preformed three-dimensional structural part 2 is approximately rectangle, multiple processing surfaces 21 requiring secondary processing mainly include one back face and four side edges which form a rectangular three-dimensional case with an open side, where curved chamfers are provided at places where the four side edges are connected, a periphery of the back face has a specific radian, a corner of the back face is disposed with a through-hole reserved for a camera module and a light filling module, and the junction between the back face and the four side edges is disposed with a stepped shape (as shown in FIG. 4E).

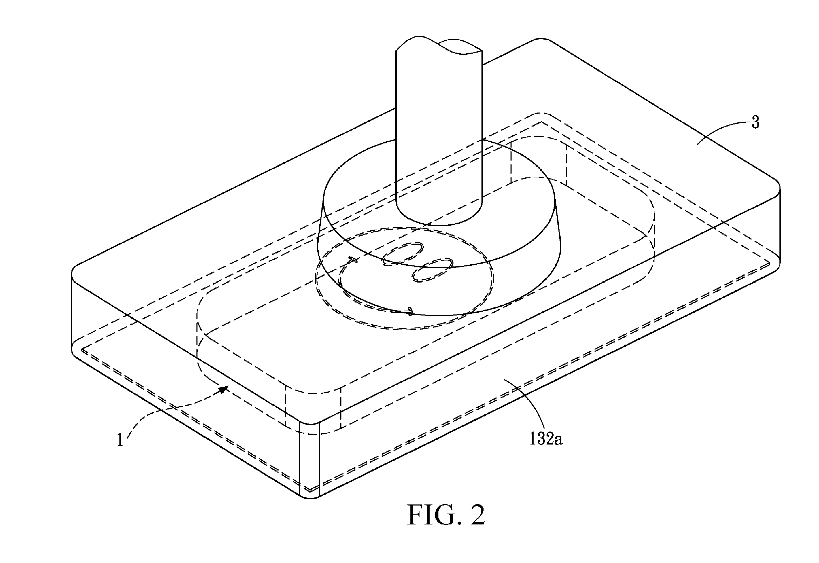

In some embodiments, the multilayer decorative film structure 1 may be heated to the foregoing thermal shaping temperature range, through a heating mold 3 or in other heating ways. At this time, negative pressure air pumping is applied to form a vacuum environment, so that the multilayer decorative film structure 1 is closely attached to multiple processing surfaces 21 of the preformed three-dimensional structural part 2, so as to form a rectangular case with a three-dimensional shape the same as that of the whole processing surfaces 21. After the attachment and shaping process in FIGs. 1 and 2 is completed, in the multilayer decorative film structure 1, a burr 11 is left at an outer edge of the processing surfaces 21 of the preformed three-dimensional structural part 2. After the superfluous blur 11 is trimmed by using a specially designed cutting mold, the secondary decorative processing of the processing surfaces 21 of the preformed three-dimensional structural part 2 is completed, as shown in FIG.s 3 and 4. A sectional view of FIG. 4E shows the result of the close attachment and shaping.

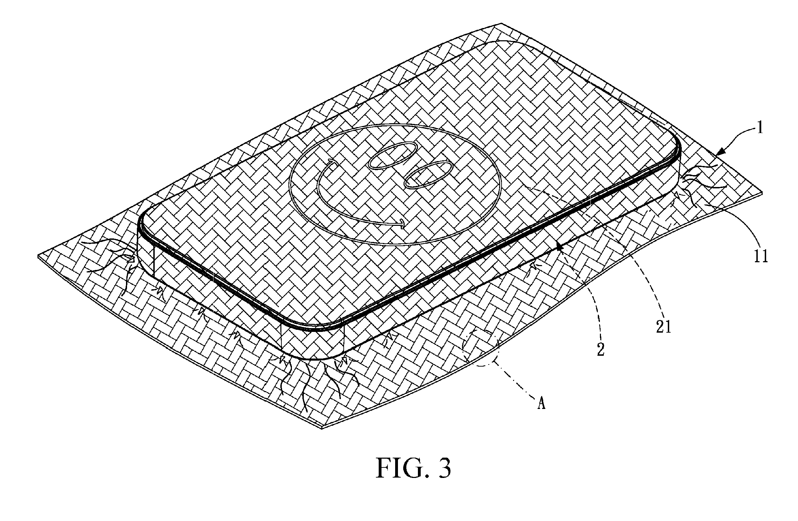

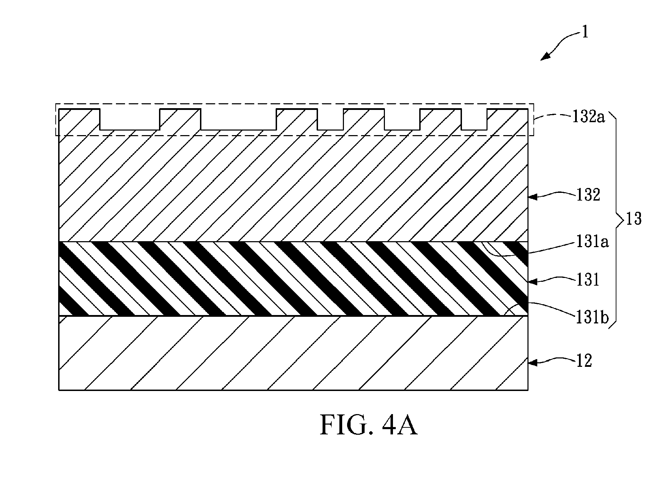

Please refer to FIG. 4A, which is a schematic sectional view of a multilayer decorative film structure according to a first embodiment of the present invention, and corresponds to the location of the region A of FIG. 3. The multilayer decorative film structure 1 mainly includes an adhesive layer 12 and a bilayer structure 13 which are mutually covered and combined. In FIG. 4A, a thermoplastic film 131 is located at an outer side of the adhesive layer 12, and a decorative film 132 is located at an outer side of the thermoplastic film 131.

The bilayer structure 13 mainly includes the thermoplastic film 131 and the decorative film 132. The thermoplastic film 131 has an inner surface 131b and an outer surface 131a, where the surface close to the processing surfaces 21 of the preformed three-dimensional structural part 2 is referred to as an inner surface 131b, and the surface far away from the processing surfaces 21 of the preformed three-dimensional structural part 2 is referred to as an outer surface 131a. In FIG. 4A, the inner surface 131b of the thermoplastic film 131 faces the adhesive layer 12, and the outer surface 131a faces the decorative film 132. In an embodiment, a thickness of the thermoplastic film 131 ranges from 0.05 mm to 1 mm. In some embodiments, the material of the thermoplastic film 131 is selected from the group consisting of nylon, thermoplastic polyurethane (TPU), thermoplastic rubber (TPR), thermoplastic vulcanizates (TPV), thermoplastic polyolefin (TPO), polyethylene terephthalate (PET), ethylene vinyl acetate (EVA) and any combination thereof. Furthermore, in an embodiment, the thermoplastic film 131 may have the foregoing thermal shaping temperature range to provide attachment and shaping functions to the multilayer decorative film structure 1. In FIG. 4A, the decorative film 132 is laminated with the outer surface 131a of the thermoplastic film 131. A thickness of the decorative film 132 ranges from 1 µm to 1 mm and the decorative film 132 has a decorative structure 132a. In general, the decorative structure 132a may be selected from the group consisting of a color structure, a pattern structure, a line structure, a reflective structure and any combination thereof. In FIG. 4A, the decorative film 132 itself may have a color and a pattern, and at the same time, the decorative structure 132a at the external side of the decorative film 132 is a three-dimensional line structure (for example, multiple convex surface structures and concave surface structures which are parallel), whose three-dimensional vein lines (raised or recessed) may provide special tactile and visual textures to the processing surfaces 21 of the preformed three-dimensional structural part 2. In addition, in FIG. 4A, the inner side of the decorative film 132, the outer surface 131a and the inner surface 131b of the thermoplastic film 131 and the outer side of the adhesive layer 12 are flat surfaces which may be processed and combined easily.

The adhesive layer 12 is sticky and is used to adhere onto the processing surfaces 21. In an embodiment, a thickness of the adhesive layer 12 ranges from 1 µm to 1 mm, and in some embodiments, the adhesive layer 12 may be implemented by a hot melt adhesive. In an embodiment, an implantation mode of the adhesive layer 12 is that the adhesive may be formed at a side of the bilayer structure 13 in a coating or spraying manner. In other embodiments, the adhesive layer 12 may also be implemented by a thermoplastic adhesive layer or thermoplastic adhesive film featuring a thermal shaping property, where the thermoplastic adhesive layer or thermoplastic adhesive film may be in the foregoing thermal shaping temperature range to provide attachment and shaping functions to the multilayer decorative film structure 1.

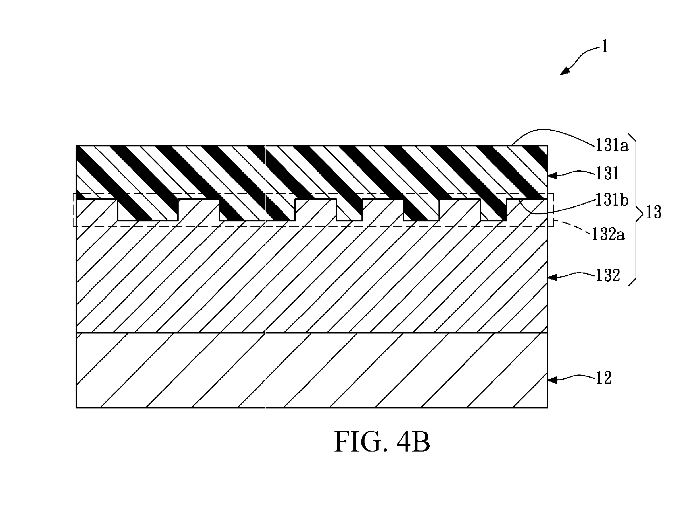

Please refer to FIG 4B, which is a schematic sectional view of a multilayer decorative film structure according to a second embodiment of the present invention, and corresponds to the location of the region A of FIG. 3. The difference between FIG. 4B and FIG. 4A lies in that a decorative film 132 is located at an outer side of an adhesive layer 12 and a thermoplastic film 131 is located at an external side of the decorative film 132. That is, an inner surface 131b of the thermoplastic film 131 is adjacent to the decorative film 132, and the outer surface 131a of the thermoplastic film 131 is located at the outermost side of the whole multilayer decorative film structure 1. A decorative structure 132a at the external side of the decorative film 132 has concavo-convex three-dimensional vein lines. The inner surface 131b of the thermoplastic film 131 adapts to the decorative structure 132a of the decorative film 132 so as to have corresponding concavo-convex three-dimensional vein lines. For the concavo-convex three-dimensional vein lines of the inner surface 131b of the thermoplastic film 131, by using a rolling engineering method in advance, after heated and pressurized, the originally flat inner surface 131b of the thermoplastic film 131 is thermally shaped into a corresponding concavo-convex structure adapting to the decorative structure 132a at the external side of the decorative film 132. Although a surface of the multilayer decorative film structure 1 shown in FIG. 4B is the flat plane of the outer surface 131a of the thermoplastic film 131, when the thermoplastic film 131 has a transparency (being transparent or translucent), the concavo-convex three-dimensional vein lines of the decorative structure 132a at the external side of the decorative film 132 may still be seen, through the transparent or translucent thermoplastic film 131, thereby forming a texture of three-dimensional vein lines in the visual sense. In another embodiment, the thermoplastic film 131 may have a color, and provide, together with the decorative film 132 as a whole, a more diversified decorative design.

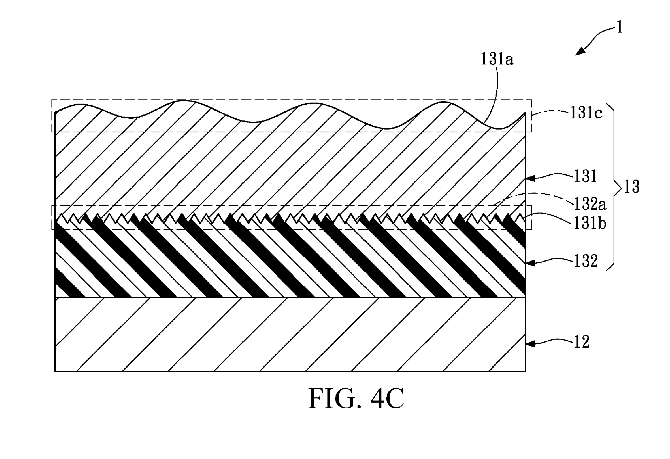

Please refer to FIG. 4C, which is a schematic sectional view of a multilayer decorative film structure according to a third embodiment of the present invention, and corresponds to the location of the region A of FIG. 3. The difference between FIG. 4C and FIG. 4B lies in that, although a thermoplastic film 131 is also located at an outermost side of a multilayer decorative film structure 1, an outer surface 131a of the thermoplastic film 131 has a three-dimensional line structure 131c (for example, a wave structure). Therefore, no matter what the structure of an outer side of a decorative film 132 is, the three-dimensional line structure 131c of the outer surface 131a of the thermoplastic film 131 provides both visual and tactile three-dimensional lines effects.

Furthermore, when a depth of the decorative structure 132a at the external side of the decorative film 132 in FIG. 4B is too great, it is possible that the inner surface 131b of the thermoplastic film 131 cannot fully adapt to and be attached to the innermost part of the decorative structure 132a. The decorative structure 132a at the external side of the decorative film 132 in FIG. 4C has a shallow structure of fine lines. In one aspect, the inner surface 131b of the thermoplastic film 131 is easy to fully adapt and be attached. In another aspect, if the thermoplastic film 131 has a transparency, the three-dimensional line structure 131c of the outer surface 131a of the thermoplastic film 131 may provide both visual and tactile three-dimensional lines effects. And meanwhile, another three-dimensional lines (for example, the structure of fine lines shown in the drawing) of the decorative structure 132a at the external side of the decorative film 132 may also provide a visual second-layer three-dimensional vein lines effect through the transparent or translucent thermoplastic film 131. Namely the second three-dimensional vein lines are also visible through the transparent or translucent thermoplastic film 131.

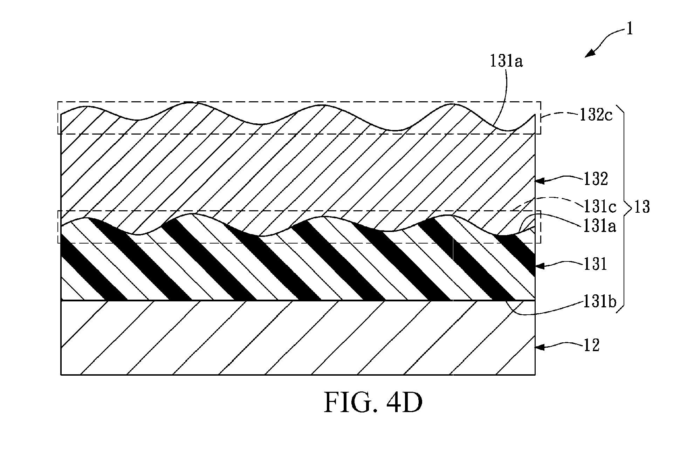

Please refer to FIG 4D, which is a schematic sectional view of a multilayer decorative film structure according to a fourth embodiment of the present invention, and corresponds to the location of the region A of FIG. 3. The difference between FIG. 4D and FIG. 4A lies in that, although a decorative film 132 is also located at an outermost side of a multilayer decorative film structure 1, an outer surface 131a of a thermoplastic film 131 in FIG. 4D has a three-dimensional line structure 131c (for example, a wave structure), and the decorative film 132 corresponds to the three-dimensional line structure 131c of the outer surface 131a of the thermoplastic film 131 in a concavo-convex manner, so that the decorative structure 132c at the external side of the decorative film 132 forms a corresponding three-dimensional shape corresponding to the three-dimensional line structure 131c of the thermoplastic film 131, thereby providing both visual and tactile three-dimensional lines effects. Of course, to enable the decorative film 132 to have such adaptation and shaping effect, the thickness of the decorative film 132 may be decreased properly, and proper materials are also required.

Furthermore, if many beads (transparent glass beads, or beads made of metal or with metal surfaces), and/or reflective surfaces (surfaces made of aluminum and its alloys, silver and its alloys, mica, shell powder, or pearl powder, and so on), are distributed on the decorative structure 132c at the external side of the decorative film 132 and are used a reflective structure, because the decorative film 132 corresponds to the three-dimensional line structure 131c of the outer surface 131a of the thermoplastic film 131 in a concavo-convex manner, the decorative structure 132c at the external side of the decorative film 132 forms a reflective structure facing a plurality of directions (a complicated multi-face structure formed to be of a wave shape or other three-dimensional shapes), thereby providing a better effect of multi-directional reflection and scattering.

In summary, the multilayer decorative film structure provided in the present invention may be attached to and shaped on multiple processing surfaces of different kinds of preformed three-dimensional structural parts in a proper processing environment and be formed of a special three-dimensional shape identical to a shape constructed by the processing surfaces. The thicknesses of the adhesive layer, the thermoplastic film and the decorative film may be adjusted according to requirements so as to form different decorative effects. In a general usage environment, if the temperate is lower than the thermal shaping temperature range of the multilayer decorative film structure, the curing state of the multilayer decorative film structure may be maintained, and warping deformation or shedding thereof may be avoided.

While the present invention has been described by the way of example and in terms of the preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1. A multilayer decorative film structure (1) for being attached to and shaped on a plurality of processing surfaces (21) of a preformed three-dimensional structural part (2), wherein the processing surfaces (21) form a three-dimensional shape, the multilayer decorative film structure (1) comprising:
an adhesive layer (12), adhered to the processing surfaces (21); and
a bilayer structure (13), located at a side of the adhesive layer (12) and comprising:
a thermoplastic film (131) with a thickness ranging from 0.05 mm to 1 mm, having an inner surface (131b) and an outer surface (131a); and
a decorative film (132), laminated at a side of the thermoplastic film (131), wherein the thickness of the decorative film (132) ranges from 1 µm to 1 mm and the decorative film (132) has a decorative structure,
wherein a thermal shaping temperature range of the multilayer decorative film structure (1) is defined from 80 to 250 degrees centigrade; within the thermal shaping temperature range, the bilayer structure (13) and the adhesive layer (12) is attachable and shapeable onto the processing surfaces (21) of the preformed three-dimensional structural part (2); when lower than the thermal shaping temperature range, the bilayer structure (13) and the adhesive layer (12) are solidified into a shape the same as the three-dimensional shape of the processing surfaces (21).

2. The multilayer decorative film structure (1) according to claim 1, wherein the material of the thermoplastic film (131) is selected from the group consisting of nylon, thermoplastic polyurethane (TPU), thermoplastic rubber (TPR), thermoplastic vulcanizates (TPV), thermoplastic polyolefin (TPO), polyethylene terephthalate (PET), ethylene vinyl acetate (EVA) and any combination thereof.

3. The multilayer decorative film structure (1) according to claim 1, wherein the material of the preformed three-dimensional structural part (2) is selected from the group consisting of polycarbonate (PC), acrylonitrile butadiene styrene (ABS), PC/ABS composite material, nylon, alloy, memory alloy, metal, hard rubber, soft rubber, foaming material, hard plastic, soft plastic and any combination thereof.

4. The multilayer decorative film structure (1) according to claim 1, wherein at least one of the adhesive layer (12), the thermoplastic film (131) and the decorative film (132) has the thermal shaping temperature range defined from 80 to 250 degrees centigrade.

5. The multilayer decorative film structure (1) according to claim 1, wherein the decorative film (132a) of the decorative film (132) is selected from the group consisting of a color structure, a pattern structure, a line structure and a reflective structure or any combination thereof.

6. The multilayer decorative film structure (1) according to claim 1, wherein the multilayer decorative film structure (1) has a Shore Type D hardness 20-80D.

7. The multilayer decorative film structure (1) according to claim 1, wherein the thickness of the adhesive layer (12) ranges from 1 µm to 1 mm.

8. The multilayer decorative film structure (1) according to claim 1, wherein the thermoplastic film (131) has a color and/or a transparency.

9. The multilayer decorative film structure (1) according to claim 1, wherein the decorative film (132a) of the decorative film (132) includes three-dimensional vein lines.

10. The multilayer decorative film structure (1) according to claim 9, wherein the decorative film (132) is located at an outer side of the adhesive layer (12), and the thermoplastic film (131) is located at an external side of the decorative film (132) and has a transparency, so that the decorative film (132a) of the decorative film (132) provides an visual three-dimensional lines effect through the thermoplastic film (131).

11. The multilayer decorative film structure (1) according to claim 1, wherein the outer surface (131a) of the thermoplastic film (131) has a three-dimensional line structure (131c).

12. The multilayer decorative film structure (1) according to claim 11, wherein the decorative film (132) is located at an outer side of the adhesive layer (12), the thermoplastic film (131) is located at an external side of the decorative film (132), and the three-dimensional line structure (131c) of the outer surface (131a) of the thermoplastic film (131) provides both visual and tactile three-dimensional lines effects.

13. The multilayer decorative film structure (1) according to claim 11, wherein the decorative film (132) is located at an outer side of the adhesive layer (12), the decorative film (132a) includes three-dimensional vein lines, and the thermoplastic film (131) is located at an external side of the decorative film (132) and has a transparency, wherein the three-dimensional line structure (131c) of the outer surface (131a) of the thermoplastic film (131) provides both visual and tactile three-dimensional lines effect, and the decorative film (132a) of the decorative film (132) provides a visual second-layer three-dimensional lines effect through the thermoplastic film (131).

14. The multilayer decorative film structure (1) according to claim 11, wherein the thermoplastic film (131) is located at an outer side of the adhesive layer (12), the decorative film (132) is located at an outer side of the thermoplastic film (131), and the decorative film (132) corresponds to the three-dimensional line structure (131c) of the outer surface (131a) of the thermoplastic film (131) in a concavo-convex manner, so that the decorative film (132c) at an external side of the decorative film (132) forms a corresponding shape corresponding to the three-dimensional line structure (131c) of the thermoplastic film (131), thereby providing both visual and tactile three-dimensional lines effects.

15. The multilayer decorative film structure (1) according to claim 11, wherein the thermoplastic film (131) is located at an outer side of the adhesive layer (12), the decorative film (132) is located at an outer side of the thermoplastic film (131) and the decorative film (132c) is a reflective structure, wherein the decorative film (132) corresponds to the three-dimensional line structure (131c) of the outer surface (131a) of the thermoplastic film (131) in a concavo-convex manner, so that the decorative film (132c) at an external side of the decorative film (132) forms the reflective structure facing a plurality of directions, thereby providing an effect of multi-directional reflection and scattering.
